# DEMANDE DE BREVET EUROPEEN

(11) **EP 0 582 938 A1**
(43) Date de publication de la demande: **16.02.1994**
(21) Numéro de dépôt: 93112403.6
(22) Date de dépôt: 03.08.1993
(51) Int. Cl.: H04N 1/00

(54) **Télécopieur comportant un dispositif de lecture d'image supporté de façon pivotante**

(30) Priorité: 11.08.1992 FR 9209986
(71) Demandeur: SWATCH AG, CH-2500 Biel (CH)
(72) Inventeur: Schlesinger, Benjamin, CH-2560 Nidau (CH)
(74) Mandataire: de Montmollin, Henri

(57) **Abrégé**

Ce télécopieur comporte un corps principal (2), un dispositif de lecture (3) pour lire un élément graphique sur un support d'enregistrement, des moyens de transport (4) pour faire défiler le support d'enregistrement devant une région de lecture (18) où l'élément graphique est lu par le dispositif de lecture (3), et des moyens support (22) sur lesquels le dispositif de lecture (3) est monté. Ce télécopieur étant caractérisé en ce que les moyens support (22) et le corps principal (2) comportent des éléments de pivotement associés (35,36) permettant aux moyens support (22) de pivoter autour d'un axe adjacent à la région de lecture (18) entre une position dite normale, dans laquelle le dispositif de lecture (3) présente une relation fonctionnelle de lecture avec la région de lecture (18), et une position déplacée, dans laquelle les éléments de pivotement sont susceptibles d'assurer le maintien de la relation fonctionnelle de lecture entre le dispositif de lecture (3) et la région de lecture (18).

## Description

La présente invention concerne un télécopieur ou appareil de transmission de télécopies, appelé plus généralement sous l'abréviation "fax".

Plus particulièrement, cette invention concerne le montage d'un dispositif de lecture optique d'éléments ou données graphiques à transmettre à l'intérieur d'un tel appareil. La présente invention s'applique aux télécopieurs comportant de tels dispositifs de lecture qui comportent, par exemple, une source de lumière, un détecteur de lumière, un miroir et une lentille optique. L'invention sera décrite ci-après en référence à cette application, donnée ici à titre d'exemple. On comprendra cependant que l'invention n'est pas limitée à cette application, mais qu'elle peut s'appliquer à des télécopieurs comportant d'autres dispositifs de lecture.

Les télécopieurs classiques comportent un récepteur pour recevoir, à partir d'une ligne téléphonique, des signaux électriques représentatifs d'éléments ou données graphiques, et des moyens d'impression pour imprimer une reproduction de ces éléments graphiques reçus, sur un support d'enregistrement, tel qu'un rouleau de papier qui est stocké dans le télécopieur. Ces télécopieurs comportent de même un dispositif de lecture pour lire, à partir d'un autre support imprimé, des éléments graphiques tels que des caractères dactylographiques imprimés sur une feuille de papier, et pour reproduire des signaux électriques correspondant à ces éléments graphiques lus. Ce type de télécopieur comporte de plus un système de transport qui est prévu pour faire défiler le support d'enregistrement dans une zone de lecture de sorte que les éléments graphiques puissent être lus par le dispositif de lecture. Un moyen de transmission transmet les signaux électriques fournis par le dispositif de lecture à un télécopieur se trouvant à distance, via la ligne téléphonique.

Le moyen de transmission, le récepteur et les autres composants de ce télécopieur sont réalisés sous la forme d'éléments électroniques. Il est prévu par ailleurs une plaque de circuit imprimé sur laquelle ces éléments électroniques sont montés pour assurer les interconnexions. Cette plaque de circuit imprimé est généralement reliée au corps du télécopieur d'une façon structurellement rigide. Par exemple, la base du télécopieur peut être pourvue de saillies moulées sur lesquelles la plaque du circuit imprimé est collée ou fixée d'une autre façon.

Il est de même connu de monter le dispositif de lecture de ce télécopieur sur la plaque de circuit imprimé. Ce dispositif de lecture est orienté sur cette plaque par rapport à la zone de lecture du système de transport, de sorte que ce dispositif puisse lire le ou les éléments graphiques sur le support d'enregistrement défilant devant la zone de lecture.

Cependant, de nombreux télécopieurs sont sujets à des déformations lorsqu'ils sont utilisés. Ces déformations peuvent se produire quand, par exemple, un livre ou n'importe quel autre objet est placé sous un coin du télécopieur et que quelqu'un s'appuie ou dispose un objet lourd sur le dessus de ce télécopieur. En conséquence de quoi le corps du télécopieur ainsi que la plaque de circuit imprimé fixée sur ce corps sont déformés. D'autres situations semblables peuvent facilement se produire. La déformation de la plaque de circuit imprimé se produit de même quand le télécopieur subit des variations de température, ce qui provoque la dilatation ou à la contraction des différents composants internes. Une telle déformation de cette plaque peut modifier l'orientation du dispositif de lecture par rapport à la zone de lecture, et faire ainsi que le dispositif de lecture ne lise plus correctement le ou les éléments graphiques.

La présente invention a donc pour but de fournir un télécopieur qui pallie les inconvénients des télécopieurs connus.

La présente invention a donc pour objet un télécopieur comportant un corps principal, un dispositif de lecture pour lire un élément graphique sur un support d'enregistrement, des moyens de transport pour faire défiler ledit support d'enregistrement et dans une zone de lecture où ledit élément graphique est lu par ledit dispositif de lecture et des moyens support sur lesquels ledit dispositif de lecture est monté, caractérisé en ce que lesdits moyens support et ledit corps principal comportent des éléments de pivotement coopérant pour permettre auxdits moyens support de pivoter, autour d'un axe adjacent à ladite zone de lecture, entre une position dite normale, dans laquelle ledit dispositif de lecture présente une relation fonctionnelle de lecture avec ladite zone de lecture, et une position dite déplacée, dans laquelle les éléments de pivotement sont susceptibles d'assurer le maintien de cette relation fonctionnelle.

Ainsi, l'orientation du dispositif de lecture par rapport à la zone de lecture ou l'information graphique imprimée sur le support d'enregistrement est lue, est maintenue, quel que soit le déplacement du dispositif de lecture, provoqué par la déformation du corps du télécopieur.

On décrira désormais l'invention en se référant à la description détaillée qui suit, prise en référence aux dessins annexés, donnée ici à titre d'exemple et dans lesquels :
- la figure 1 est une vue de côté d'un mode de réalisation d'un télécopieur comportant un dispositif de lecture selon la présente invention;
- la figure 2 est une vue de côté faite selon la ligne II-II de la figure 3; et
- la figure 3 est une vue de dessus du dispositif représenté à la figure 2.

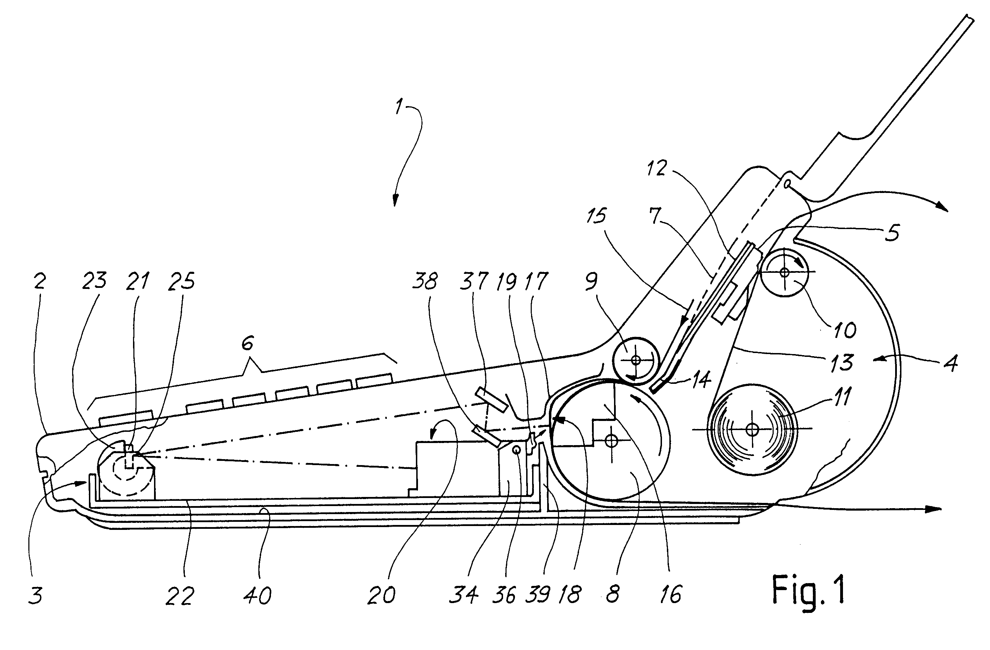

Comme on le voit sur la figure 1, un télécopieur selon l'invention, représenté par la référence générale 1, comporte essentiellement un corps principal 2, un dispositif 3 de lecture, un dispositif 4 de transport du papier et une tête d'impression 5. D'autres éléments nécessaires au fonctionnement propre de l'appareil 1, tel qu'un récepteur, un moyen de transmission et un circuit de sélection des numéros, ont été omis de la figure 1 dans un but de simplification des dessins.

Le corps principal 2 de l'appareil 1 comporte une série de touches 6 qui permettent d'effectuer la sélection d'un numéro d'appel d'un autre télécopieur situé à distance, auquel on souhaite transmettre un message sous forme de télécopie, et qui permettent de commander le fonctionnement de l'appareil 1. Le corps principal 2 comporte de plus une surface de guidage 7 sur laquelle sont placées des feuilles de papier portant un ou des éléments graphiques imprimés ou inscrits d'une autre manière, élément qu'un utilisateur de l'appareil 1 souhaite transmettre à l'appareil situé à distance.

Le système 4 de transport du papier comporte un galet ou rouleau d'entraînement principal 8, un galet ou rouleau 9 d'alimentation en papier, un galet ou rouleau d'impression 10 et un rouleau de papier 11 stocké à l'intérieur de l'appareil 1. Le galet d'alimentation 9 engrène avec le galet d'entraînement principal 8 et est entraîné par celui-ci. Le ou les moteurs et les trains d'engrenages nécessaires pour permettre la rotation des galets 8, 9 et 10 ont de même été omis de la figure 1.

La tête d'impression 5 est fixée au corps principal 2 de l'appareil 1 par un bras élastique 12 qui rappelle la tête d'impression 5 vers le galet d'impression 10. Quand des signaux électriques correspondant à un message de télécopie sont reçus par l'appareil 1, le galet ou rouleau d'impression 10 est entraîné en rotation dans un sens horaire, comme représenté sur la figure 1. Une bande de papier 13 est ainsi amené devant la tête d'impression 5, de sorte que la tête d'impression 5 puisse imprimer le message de télécopie reçu, sur la bande 13. Le corps principal 2 est pourvu d'une ouverture (non représentée), par l'intermédiaire de laquelle la partie de la bande 13 portant le message imprimé peut sortir de l'appareil 1.

Quand l'utilisateur de l'appareil ou télécopieur 1 souhaite transmettre un message sous forme de télécopie à un autre appareil situé à distance, des feuilles de papier comportant sur un côté une ou des informations ou données graphiques sont placées sur la surface de guidage 7. Les feuilles de papier sont maintenues par friction entre le galet d'alimentation 9 et un élément 14 de séparation du papier. Quand l'utilisateur actionne une des touches 6 pour demander à l'appareil 1 de transmettre le message sous forme de télécopie, le galet ou rouleau d'entraînement 8 est entraîné dans un sens anti-horaire, comme indiqué sur la figure 1. Le galet 9 d'alimentation en papier est entraîné par le galet d'entraînement 8 et est ainsi entraîné en rotation dans le sens horaire. La partie extrême supérieure du papier qui a été placée sur la surface de guidage 7 est amenée par le galet d'alimentation 9, dès que celui-ci pivote, le long d'un chemin 15, entre le galet 9 d'alimentation et le galet d'entraînement 8.

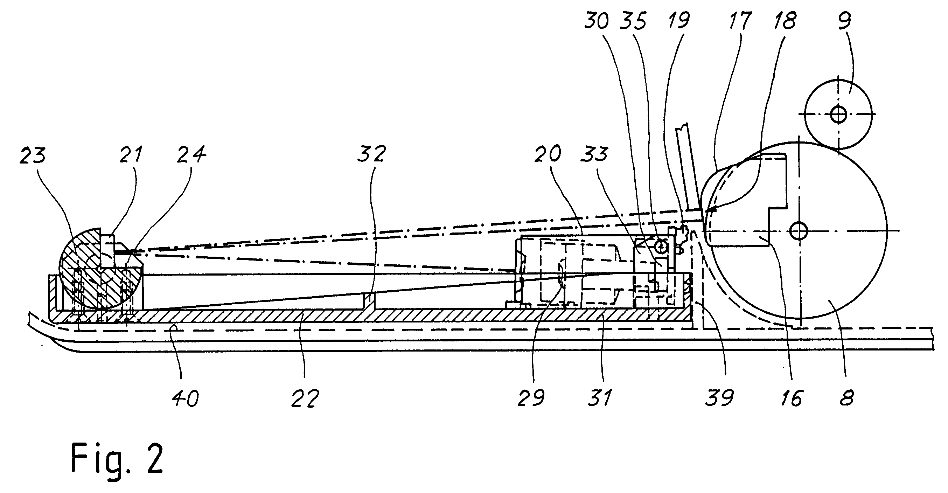

Le système de transport 4 comporte de même deux éléments de guidage, respectivement 16 et 17. La feuille de papier ainsi prise depuis la surface de guidage 7 est entraînée le long du chemin 15 par son contact de friction avec le galet d'entraînement 8, pour passer entre les deux éléments de guidage 16 et 17, autour du reste du galet d'entraînement principal 8 pour enfin quitter le corps 2 de l'appareil 1. Comme on le voit mieux sur la figure 2, l'élément de guidage 17 est espacé du galet d'entraînement 8 et comporte une surface en regard de l'élément de guidage 16, ce qui oblige le papier à passer autour du galet d'entraînement 8 pour lui faire suivre un chemin tangentiel à la circonférence du galet d'entraînement 8, dans une région 18. Le papier en suivant le chemin 15 est ainsi maintenu sous une forme relativement plate dans cette région 18 pour faciliter d'avantage la lecture de ou des éléments graphiques sur le papier, par le dispositif de lecture d'image 3. D'autres modes de réalisation de ce télécopieur peuvent cependant permettre au papier de suivre une trajectoire différente dans cette région 18.

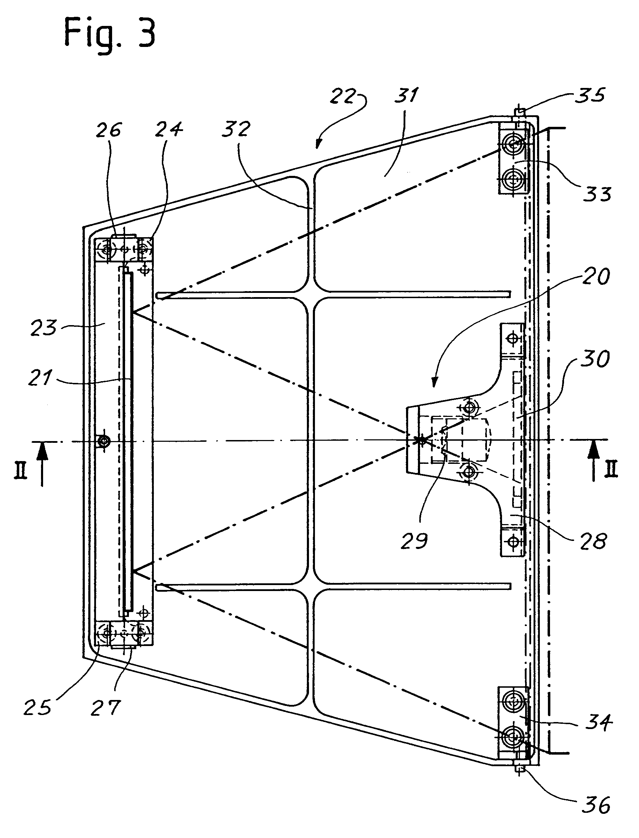

Comme on le voit sur les figures 1 à 3, le dispositif de lecture 3 comporte essentiellement une matrice 19 de diodes électroluminescentes (connues sous l'abréviation anglaise LED) formant des moyens de production de lumière, une unité 20 de détection de la lumière et un miroir 21. Le dispositif de lecture 3 est monté sur un support 22. Le miroir 21 est fixé sur un organe 23 qui est ajustable de façon rotative et qui est relié au support 22 par l'intermédiaire de deux supports de montage 24 et 25. Des portées cylindriques ou arbres 26 et 27 sont ménagés à chacune des extrémités de l'organe 23 pour le montage de cet organe dans des orifices correspondants appartenant aux supports de montage ou étriers 24 et 25. L'unité 20 de détection de la lumière comporte un logement 28 fixé au support 22, et dans lequel est disposée une lentille optique 29 et une matrice 30 d'un circuit à couplage de charge (connu sous l'abréviation anglaise CCD) formant des moyens de détection de la lumière.

La matrice 19 de diodes électroluminescentes est montée sur le logement 28 de l'unité 20 de détection de la lumière.

En utilisation, la matrice 19 de diodes électroluminescentes émet une lumière dont le spectre d'émission est situé dans le vert-jaune, sur la surface du papier passant dans la région ou zone 18. Cette lumière émise est déflechie et renvoyée par la surface du papier, avec des variations d'intensité se retrouvant dans la lumière qui est produite par l'élément graphique sur le papier. Le miroir 21 est positionné sur le support 22 afin de réfléchir la lumière émise, depuis la surface du papier vers l'unité 20 de détection de la lumière. Dans le mode de réalisation représenté sur la figure 1, des miroirs supplémentaires respectivement 37 et 38 sont utilisés pour modifier le trajet suivi par la lumière, tandis que dans le mode de réalisation représenté sur la figure 2, la lumière est directement réfléchie par le miroir 21 vers l'unité 20 de détection de la lumière.

La lentille optique 29 focalise la lumière reçue par l'unité 20 de détection de la lumière, sur la matrice 30 du circuit à couplage de charge. La lumière atteignant la surface de la matrice 30 est convertie en des signaux électriques. La variation des signaux électriques résultant de la variation d'intensité de la lumière détectée est ainsi utilisée par les moyens de transmission au sein du télécopieur 1 pour transmettre l'élément graphique lu à un télécopieur à distance.

Le support 22 comporte une plaque de montage 31 comprenant des nervures de renforcement 32 pour améliorer sa rigidité de sorte que la plaque de montage 31 conserve sa forme en utilisation. La position relative entre les parties du dispositif de lecture 3, montées sur le support 22, est ainsi conservée. Le support 22 de même comporte des supports de montage ou étriers 33 et 34 qui sont fixés à la plaque de montage 31 et qui comportent des saillies respectives 35 et 36 adjacentes à la région ou zone de lecture 18 pour leur mise en place dans des ouvertures correspondantes (non représentées), dans le corps 2 du télécopieur 1. Les saillies 35 et 36 coopèrent avec des saillies correspondantes pour permettre au support 22 et au dispositif de lecture 3 monté sur celui-ci, de pivoter autour d'un axe parallèle au plan du papier, dans la région ou zone de lecture 18. Dans d'autres modes de réalisation de la présente invention, des éléments associés qui permettent un tel pivotement peuvent être utilisés.

Le corps 2 du télécopieur 1 est pourvu d'un élément d'arrêt ou butée 39 contre lequel le support 22 vient abouter en utilisation normale, tel que représenté sur les figures 1 et 2. L'élément d'arrêt ou butée 39 empêche le support 22 de pivoter dans un sens, tout en lui permettant de pivoter librement dans l'autre sens. Le support 22 est supporté de telle sorte qu'il soit espacé de la surface intérieure 40 du corps du télécopieur 1, si bien qu'en utilisation normale le support 22 est uniquement en contact avec le corps 2 par l'intermédiaire des saillies 35 et 36, et de l'élément d'arrêt ou butée 39.

Dans un autre mode de réalisation, le support 22 est en contact avec la surface intérieure du corps 2 en utilisation normale. Le corps 2 peut comporter un ou plusieurs éléments d'espacement faisant saillie de la surface intérieure 40 ou d'autres de ses surfaces intérieures. Ces éléments d'espacement peuvent venir en contact avec le support 22, en utilisation normale, et peuvent être réalisés en caoutchouc ou en un autre matériau élastique. L'élément d'arrêt ou butée 39 peut être omis de cet agencement de sorte que le support 22 soit uniquement en contact avec les éléments d'espacement dans la position d'utilisation normale. Selon une variante de réalisation, le support 22 peut être en contact avec l'élément d'arrêt ou butée 39 et peut être en utilisation normale, en contact avec les éléments d'espacement quand le corps 2 est déformé. Comme le comprendra l'homme du métier, d'autres agencements peuvent maintenir le support 22 dans une position normale, tout en lui permettant de pivoter quand le corps 2 se déforme.

Une force appliquée au corps 2 du télécopieur 1 pouvant provoquer sa torsion, son fléchissement, son gauchissement ou toute autre déformation, peut ne pas être suffisante pour transmettre une contrainte au support 22. Cependant, si une telle déformation est suffisamment grande pour appliquer une contrainte au support 22, les saillies 35 et 36 et les ouvertures associées ménagées dans le corps 2 permettent au support de pivoter autour de son axe de rotation de sorte que le support 22 conserve sa forme. La relation entre la matrice de diodes éléctroluminescentes 19, le miroir 21 et l'unité 20 de détection de la lumière est ainsi conservée.

De plus, la disposition des saillies 35 et 36 et des ouvertures associées permettant de positionner l'axe de rotation sur le support 22 de façon adjacente à la région 18 où l'élément graphique sur le papier est lu, permet au support 22 de pivoter tout en conservant la relation fonctionnelle de lecture entre le dispositif de lecture 3 et la région ou zone de lecture 18, ce qui est nécessaire pour un fonctionnement correct du dispositif de lecture 3. On comprendra que la distance entre l'axe de rotation et la région de lecture 18, les dimensions exactes du support 22, la taille de la région de lecture 18 et la position relative des parties du dispositif de lecture 3 déterminent la distance angulaire sur laquelle le support 22 peut pivoter tout en laissant fonctionnel le dispositif de lecture 3.

On comprend de ce qui vient d'être décrit, qu'on a fourni dont élécopieur selon la revendication 1, caractérisé en ce que le dispositif de lecture 3 comporte des moyens de production de lumière 19 pour projeter de la lumière sur le support d'enregistrement dans la région de lecture 18, le support d'enregistrement renvoyant ladite lumière projetée, une lentille optique 29 pour transmettre la lumière renvoyée, et des moyens 30 de détection de lumière pour détecter la lumière transmise, lesdits moyens 19 de production de la lumière, la lentille optique 29 et les moyens 30 de détection de la lumière étant montés afin d'avoir entre eux une relation prédéterminée dans la position normale, et de conserver cette relation prédéterminée dans ladite position déplacée.

On précisera aussi que le dispositif de lecture 3 comporte de plus un miroir 21 pour réfléchir la lumière réfléchie vers ladite lentille optique 29, le miroir 21 étant monté sur les moyens support 22 pour avoir une relation prédéterminée avec la lentille optique 29 dans la position normale et pour conserver cette relation prédéterminée dans la position déplacée.

On comprend aussi que le miroir 21 est monté au loin de la région de lecture 18, et en ce que les moyens 19 de production de la lumière, la lentille optique 29 et les moyens 30 de détection de la lumière sont montés au proche de la région de lecture 18.

Par ailleurs, on voit que le corps principal 2 comporte un élément d'arrêt ou butée 39 contre lequel les moyens support 22 aboutent pour maintenir les moyens support 22 dans la position normale tout en permettant un mouvement pivotant vers la position déplacée, tandis que le corps principal 2 comporte de plus au moins un élément élastique pour venir en contact avec les moyens support quand ledit corps principal est déformé.

Enfin, on comprendra que d'autres modifications et/ou compléments peuvent être apportés à ce télécopieur sans sortir du cadre de la présente invention telle que définie dans les revendications annexées.

## Revendications

1. Télécopieur comportant :
- un corps principal (2),
- un dispositif de lecture (3) pour lire un élément graphique sur un support d'enregistrement,
- des moyens de transport (4) pour faire défiler ledit support d'enregistrement devant une région de lecture (18) où ledit élément graphique est lu par ledit dispositif de lecture (3), et
- des moyens support (22) sur lesquels ledit dispositif de lecture (3) est monté,
caractérisé en ce que lesdits moyens support (22) et ledit corps principal (2) comportent des éléments de pivotement associés (35,36) permettant auxdits moyens support (22) de pivoter autour d'un axe adjacent à ladite région de lecture (18) entre une position dite normale, dans laquelle ledit dispositif de lecture (3) présente une relation fonctionnelle de lecture avec la région de lecture (18), et une position déplacée, dans laquelle les éléments de pivotement sont susceptibles d'assurer le maintien de ladite relation fonctionnelle de lecture entre le dispositif de lecture (3) et ladite région de lecture (18).

2. Télécopieur selon la revendication 1, caractérisé en ce que le dispositif de lecture (3) comporte des moyens de production de lumière (19) pour projeter de la lumière sur ledit support d'enregistrement dans ladite région de lecture (18), ledit support d'enregistrement renvoyant ladite lumière projetée, une lentille optique (29) pour transmettre ladite lumière renvoyée, et des moyens (30) de détection de lumière pour détecter la lumière transmise, lesdits moyens (19) de production de la lumière, la lentille optique (29) et les moyens (30) de détection de la lumière sont montés afin d'avoir entre eux une relation prédéterminée dans la position normale, et de conserver cette relation prédéterminée dans ladite position déplacée.

3. Télécopieur selon la revendication 2, caractérisé en ce que ledit dispositif de lecture (3) comporte de plus un miroir (21) pour réfléchir ladite lumière réfléchie vers ladite lentille optique (29), le miroir (21) étant monté sur lesdits moyens support (22) pour avoir une relation prédéterminée avec la lentille optique (29) dans la position normale et pour conserver cette relation prédéterminée dans la position déplacée.

4. Télécopieur selon la revendication 3, caractérisé en ce que le miroir (21) est monté au loin de la région de lecture (18), et en ce que les moyens (19) de production de la lumière, la lentille optique (29) et les moyens (30) de détection de la lumière sont montés au proche de la région de lecture (18).

5. Télécopieur selon l'une des revendications 2 à 4, caractérisé en ce que les moyens (19) de production de la lumière comportent une matrice de diodes électroluminescentes.

6. Télécopieur selon l'une des revendications 2 à 5, caractérisé en ce que les moyens (30) de détection de la lumière comportent une matrice d'un circuit à coupleur de charge.

7. Télécopieur selon l'une quelconque des revendications précédentes, caractérisé en ce que le corps principal (2) comporte un élément d'arrêt ou butée (39) contre lequel lesdits moyens support (22) aboutent pour maintenir les moyens support (22) dans la position normale tout en permettant un mouvement pivotant vers la position déplacée.

8. Télécopieur selon l'une quelconque des revendications précédentes, caractérisé en ce que le corps principal (2) comporte de plus au moins un élément élastique pour venir en contact avec les moyens support quand ledit corps principal est déformé.
